# EUROPÄISCHE PATENTSCHRIFT

(11) **EP 1 743 113 B1**
(45) Veröffentlichungstag und Bekanntmachung des Hinweises auf die Patenterteilung: **27.01.2010**
(21) Anmeldenummer: 05735461.5
(22) Anmeldetag: 16.04.2005
(51) Int. Cl.: F16K 49/00, F16K 51/02

(54) **VENTIL ZUR DAMPFDICHTEN ENTKOPPELUNG ZWEIER MITEINANDER VERBUNDENER PROZESSEINHEITEN**
VALVE USED FOR VAPOR-TIGHTLY DISCONNECTING TWO INTERCONNECTED PROCESS UNITS
SOUPAPE POUR LE DESACCOUPLEMENT, ETANCHE A LA VAPEUR, DE DEUX UNITES DE PROCESSUS RELIEES ENTRE ELLES

(30) Priorität: 27.04.2004 DE 102004020844; 27.08.2004 DE 102004041853
(43) Veröffentlichungstag der Anmeldung: 17.01.2007
(73) Patentinhaber: VON ARDENNE ANLAGENTECHNIK GMBH, 01324 Dresden (DE)
(72) Erfinder: GOTTSMANN, Lutz, 01900 Kleinröhrsdorf (DE); SEYFERT, Ulf, 01324 Dresden (DE); WENZEL, Bernd-Dieter, 01909 Grosshartau (DE); JAEGER, Reinhard, 01640 Coswig (DE)
(74) Vertreter: Adler, Peter
(86) Internationale Anmeldenummer: PCT/DE2005/000701
(87) Internationale Veröffentlichungsnummer: WO 2005/106303

(56) Entgegenhaltungen:
- US-A- 3 028 874
- US-A- 3 211 169
- US-A- 5 915 410
- US-A1- 2001 047 826
- US-B1- 6 321 780

## Beschreibung

Die Erfindung betrifft ein Ventil zur dampfdichten Entkoppelung zweier miteinander verbundener Prozesseinheiten gemäß dem Oberbegriff des Anspruchs 1.

Ventile zum Absperren von Gasen, Flüssigkeiten und Schüttgut sind bekannt. Sie finden Anwendung beispielsweise im chemischen oder Vakuumanlagenbau. Ein solches Ventil ist zum Beispiel aus der US 6, 321, 780 B1 bekannt.

Ein Nachteil der nach dem Stand der Technik bekannten Ventile liegt darin, dass deren Funktionsfähigkeit und Zuverlässigkeit bei Beaufschlagung mit heißem, dampfförmigen Beschichtungsmaterial, insbesondere in Vakuumanlagen zur Beschichtung von Substraten mit metallischen Materialien mittels physikalischer Dampfabscheidung (PVD), nicht gewährleistet werden kann.

Die Ursachen sind einerseits darin zu sehen, dass das durchströmende dampfförmigen Beschichtungsmaterial sich an der Kanalwand des Ventils abscheidet. Das Beschichtungsmaterial muss in Form von heißem Dampf bei geöffneter Ventilstellung durch das Ventil befördert bzw. muss bei geschlossener Ventilstellung heißen Dampf vom Prozessraum der Beschichtungsmaterial zuführenden Seite fernhalten. Dabei treten an den relativ zur Prozesstemperatur kälteren Bauteilen des Ventils Kondensatablagerungen auf. Ein sich fortschreitend entwickelnder Schichtaufbau bewirkt eine Funktionseinschränkung oder Funktionsstörung der Öffnungs- und insbesondere Schließfunktion des Ventils, da die bestimmungsgemäßen Funktionstoleranzen zur Durchführung von Bewegungen und die aufeinander abgestimmten Fassformen zur Abrichtung beeinflusst werden.

Andererseits treten bei den nach dem Stand der Technik bekannten Ventilen ungewollte Legierungsbildungen zwischen dem dampfförmigen metallischen Beschichtungsmaterial und dem Ventil selbst auf, was zur Zerstörung des Ventils führt. Beide Effekte wirken sich auf die Funktionsfähigkeit der gesamten Vakuumanlage aus.

Daher ist es Aufgabe der vorliegenden Erfindung, ein Ventil zur dampfdichten Entkoppelung zweier miteinander verbundener Vakuumprozesskammern bereitzustellen, wodurch die Funktionszuverlässigkeit verbessert wird.

Erfindungsgemäß wird die Aufgabe durch die Merkmale des Anspruchs 1 gelöst, wobei unter anderem die dampfbeaufschlagte Oberfläche des Kanals des Ventils einen Dampfkondensation abweisenden Bereich ausweist, der mit einer das Ventil umhüllend gestalteten Heizeinrichtung wärmeleitend verbunden ist.

Durch eine ausreichend hohe Temperatur an den Kanalwänden wird das darauf auftreffende dampfförmige Beschichtungsmaterial reverdampft und somit in den Kanal reflektiert. Je höher die Temperatur ist, umso stärker ist dieser Effekt. Mit zunehmender Temperatur an der Oberfläche sinkt die Abscheidungsmenge des durchströmenden dampfförmigen Beschichtungsmaterials bis hin zu einem im Wesentlichen von Kondensatablagerungen freien Transport bei Temperaturen oberhalb der Verdampfungstemperatur des jeweiligen Beschichtungsmaterials in Abhängigkeit vom Druck.

Zur Temperatur- und Druckbeständigkeit des Ventils bei Nutzungstemperaturen in einem Bereich von 20°C bis 1000°C, vorzugsweise in einem Bereich von 20°C bis 800°C ist der Ventilkörper im Wesentlichen aus einem Werkstoff mit einer entsprechend hohen thermischen Stabilität gefertigt. Ebenfalls bestehen auch sämtliche weiteren in dem Kanal angeordneten Bauteile im Wesentlichen aus Werkstoffen mit einer entsprechend hohen oder höheren thermischen Stabilität. Alle, auch nicht in dem Bereich des Kanals oder an der Kanaloberfläche angeordnete Bauteile sind in ihrer Werkstoffauswahl hinsichtlich Festigkeit, insbesondere Festigkeit bei hohen und höheren Temperaturen, Längenausdehnungskoeffizienten und Resistenz gegenüber dem Dampf des Beschichtungsmateriales aufeinander abgestimmt.

Zweckmäßig ist es, dass zusätzlich zur dampfbeaufschlagten Oberfläche des Kanals die Absperrvorrichtung im gesamten Bereich der Kanaloberfläche durch die Heizeinrichtung wärmeleitend verbunden ist.

Somit wird die Kondensation des dampfförmigen Beschichtungsmaterials über den gesamten Weg durch das Ventil unterbunden. Dazu ist als Heizeinrichtung eine Strahlungsheizung, die vorzugsweise als elektrische Widerstandheizung ausgebildet ist, um den Ventilkörper angebracht.

Um bei geschlossener Ventilstellung eine Temperaturbeeinflussung des Prozessraumes der Bedampfung (erste Vakuumprozesskammer) durch den Prozessraum der Verdampfung (zweite Vakuumprozesskammer) bei Temperaturunterschieden zwischen beiden zu verringern, ist es vorteilhaft, dass mindestens ein Teilstück des Kanals des Ventils eine von den anderen Teilstücken des Kanals abweichende Richtung des Kanalverlaufs gegenüber den übrigen Teilstücken des Kanals aufweist.

Vorteilhaft ist es, dass die Heizeinrichtung des Kanals wenigstens zwei voneinander unabhängige Heizungsteile aufweist, wobei ein jeweiliges Heizungsteil im Bereich eines der beiden sich von der Absperrvorrichtung erstreckenden Kanalabschnitte angeordnet ist. Somit können dampfeintritts- und dampfaustrittsseitig, also verdampfungs- und bedampfungsseitig den jeweiligen Prozessbedingungen angepasste Temperaturregime gefahren werden.

In einer Ausführungsform ist vorgesehen, dass die Absperrvorrichtung eine Dichtung umfasst, wobei die Dichtung auf einer umfänglichen Auskragung in der Kanaloberfläche angeordnet ist.

Die Dichtung ist als vorzugsweise als umfängliche Flachdichtung ausgebildet und liegt auf der umfänglichen Auskragung in der Kanaloberfläche auf. Von der Erfindung erfasst sind auch andere geeignete Ausführungen der Dichtung, wie beispielsweise eine faserige Dichtung. Die Dichtung weist jedoch in jedem Fall wenigstens die gleiche thermische Belastbarkeit wie die Kanaloberfläche auf.

In einer bevorzugten Weiterbildung ist vorgesehen, dass die Absperrvorrichtung einen Stößel mit einem endseitigen Ventilteller umfasst.

Der Stößel ist in einem Winkel, vorzugsweise etwa quer, zu der Durchflussrichtung des Kanals angeordnet. Durch eine Stößellagerung ist der endseitig an dem Stößel angeordnete Ventilteller in dem Bereich einer Kanalbiegung in dem Kanal linear beweglich gelagert. Die Stößellagerung umfasst zur vakuumdichten Ausbildung des Ventils wenigstens ein, vorzugsweise gestaffelt zwei oder mehr, umfänglich um den Stößel angeordnete Dichtungen.

Bei geöffneter Ventilstellung gibt der Ventilteller die Kanalbiegung frei und ist in einer räumlichen Ausnehmung in der Kanalbiegung angeordnet. Bei geschlossener Ventilstellung liegt der Ventilteller auf der parallel zum Ventilteller in dem Kanal ausgebildeten Auskragung bzw. der Dichtung auf der Auskragung auf. Der Kanaldurchgang ist somit im Sinne der Funktion eines Tellerventils vollumfänglich verschließbar.

In einer besonders bevorzugten Weiterbildung ist vorgesehen, dass der Stößel und/oder der Ventilteller einen Innenraum aufweist. Ganz besonders bevorzugt ist in dem Innenraum eine Heizvorrichtung angeordnet. Durch die zusätzlich zur Wärmestrahlung aufheizende Heizvorrichtung wird eine vollständige Ausheizung bis in die Nebenkammern des Kanals sichergestellt werden.

Die Erfindung soll nachfolgend anhand eines Ausführungsbeispiels näher erläutert werden. In den zugehörigen Zeichnungen zeigen:
- Figur 1: einen Querschnitt durch ein erfindungsgemäßes Ventil im geöffneten Zustand und
- Figur 2: einen Querschnitt durch ein erfindungsgemäßes Ventil im geschlossenen Zustand.

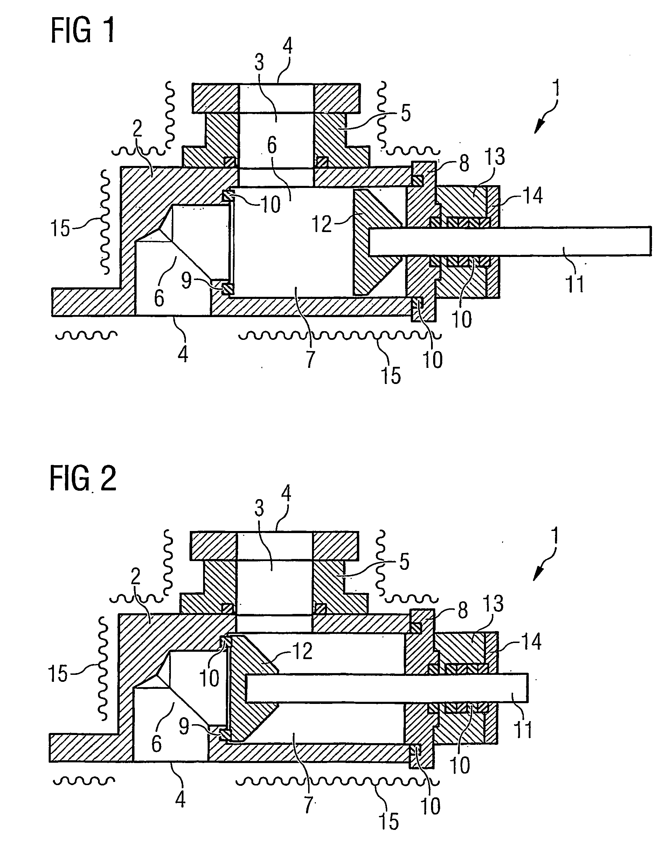

Die Figuren 1 und 2 zeigen ein erfindungsgemäßes Ventil 1 mit einem durch das Ventilgehäuse 2 durchgängigen Kanal 3 und einer in dem Kanal geschalteten Absperrvorrichtung.

Zur Temperatur- und Druckbeständigkeit des Ventils bei den für die Vakuumbeschichtung üblichen Prozesstemperaturen ist der Ventilkörper im Wesentlichen aus Grafit oder einem anderen Werkstoff mit einer entsprechend hohen thermischen Stabilität gefertigt. Ebenfalls bestehen auch sämtliche weiteren in dem Kanal 3 angeordneten Bauteile im Wesentlichen aus dem gleichen oder vergleichbaren thermisch stabilen Werkstoff. Für weitere, nicht in den Kanal 3 oder an der Kanaloberfläche angeordnete Bauteile sind auch andere thermisch stabilen Werkstoffe einsetzbar, beispielsweise hochtemperaturfester Stahl oder eine solche Stahllegierung.

An einer ersten Kanalöffnung 4 ist zu Montagezwecken ein Flansch montiert. Der Kanalverlauf weist ausgehen von der mit einem Flansch 5 versehenen Öffnung im Wesentlichen eine erste Biegungen 6 von 90° und eine zweite Biegung 6 von 90° auf, sodass die beiden Kanalenden an den Kanalöffnungen 4 parallel versetzt, d.h. nicht linear, fluchten. Der Kanal 3 ist im Bereich der Kanalöffnungen 4 und der zweiten Biegung 6 röhrenartig und rund ausgebildet. In der ersten Biegung 6 weist der Kanal 3 eine Ausnehmung 7 zur Anordnung eines Tellerventils 8 auf. Zwischen der ersten und der zweiten Biegung 6 ist in den Kanal 3 eine umfängliche, im Ausführungsbeispiel eine ringförmige Auskragung 9 eingearbeitet, wobei in der Auskragung 9 eine Ausnehmung zur Aufnahme einer Dichtung 10 ausgebildet ist. Der äußere Durchmesser der Auskragung 9 stimmt mit dem Durchmesser der zylindrischen Ausnehmung für das Tellerventil 8 in der ersten Biegung 6 überein.

Das Tellerventil 8 besteht aus einem Stößel 11 und einem endseitig an dem Stößel 11 montierten Ventilteller 12. Der Stößel 11 tritt jeweils quer zu den beiden endseitigen Kanalabschnitten aus dem Ventilgehäuse 2 heraus. Im Durchtrittsbereich ist umfänglich um den Stößelaustritt außen auf dem Ventilgehäuse 2 eine Ausnehmung 7 mit einer Dichtung 10 eingearbeitet. Zusätzlich ist in dem Austrittsbereich des Stößels 11 ein Dichtungskörper 13 mit mehreren gestaffelt angeordneten Dichtungen 10 montiert. Der Stößel 11 tritt ebenfalls, auch im geschlossenen Zustand des Ventils 1, aus dem Dichtungskörper 13 aus und ist endseitig mit einem Ventiltrieb (hier nicht dargestellt) verbunden.

Figur 1 zeigt das Ventil 1 im geöffneten Zustand. Der Ventiltellerdurchmesser ist kleiner als der Ausnehmungsdurchmesser, sodass durch bei einer Tellerventilbewegung durch Umströmung um den Ventilteller 12 ein Druckunterschied zwischen den beiden Seiten des Ventiltellers 12 abgebaut wird. Das Tellerventil 8 ist in der Öffnungsstellung in der zylindrischen Ausnehmung 7 in der ersten Biegung 6 angeordnet und gibt somit den Kanal 3 zum Durchfluss frei.

Figur 2 zeigt das Ventil 1 im geschlossenen Zustand. Der Ventilteller 12 liegt auf der Dichtung 10 in der parallel zum Ventilteller 12 in dem Kanal 3 ausgebildeten Auskragung 9 auf. Der Kanaldurchgang ist im Sinne der Funktion eines Tellerventils 8 vollumfänglich verschlossen.

Zur Demontage des Tellerventils 8 ist das Ventilgehäuse 2 zweiteilig ausgebildet, sodass die Gehäusewand im Bereich des Durchstoß des Stößels 11 durch das Ventilgehäuse 2 als ein Gehäusedeckel 14 geformt ist und von dem übrigen Ventilgehäuse 2 gelöst und an diesem wieder vakuumdicht mit einer Dichtung 10 fixiert werden kann. Der Gehäusedeckeldurchmesser ist dabei größer als der Ventiltellerdurchmesser. Somit ist der Dichtungskörper 13 auf dem Gehäusedeckel 14 montiert.

Die Heizeinrichtung 15 ist als eine Strahlungsheizung in Form einer elektrischen Widerstandsheizung um das Ventilgehäuse 2 mit Anbauteilen herum angebracht. Das Ventilgehäuse 2 kann mittels der Heizeinrichtung auf bis zu etwa 1000 °C erwärmt werden. Dabei wird das Tellerventil 8 über die gute Wärmeleitfähigkeit des Materials und durch Wärmestrahlung auf die gleiche Temperatur wie die Kanalwand erwärmt. Semit sind die Kanaloberfläche und sämtliche in dem Kanal 3 angeordneten Oberflächen mittels der Heizeinrichtung 15 im Wesentlichen homogen temperierbar.

### Bezugszeichenliste

- 1: Ventil
- 2: Ventilgehäuse
- 3: Kanal
- 4: Kanalöffnung
- 5: Flansch
- 6: Kanalbiegung
- 7: Ausnehmung
- 8: Tellerventil
- 9: Auskragung
- 10: Dichtung
- 11: Stößel
- 12: Ventilteller
- 13: Dichtungskörper
- 14: Gehäusedeckel
- 15: Heizeinrichtung

## Patentansprüche

1. Ventil (1) zur dampfdichten Entkoppelung zweier miteinander verbundener Prozesseinheiten, mit einem durchgängigen Kanal (3) zur Verbindung der beiden Prozesseinheiten und mit einer in dem Kanal (3) geschalteten Absperrvorrichtung, wobei die dampfbeaufschlagte Oberfläche des Kanals (3) des Ventils (1) einen eine Dampfkondensation abweisenden Bereich ausweist, der mit einer das Ventil (1) umhüllend gestalteten Heizeinrichtung (15) wärmeleitend verbunden ist, **dadurch gekennzeichnet, dass** die beiden Kanalöffnungen (4) auf der jeweiligen Seite des Ventils (1) zueinander höhenversetzt und/oder seitenversetzt fluchtend angeordnet sind.

2. Ventil (1) nach Anspruch 1, **dadurch gekennzeichnet, dass** zusätzlich zur dampfbeaufschlagten Oberfläche des Kanals (3) die Absperrvorrichtung im gesamten Bereich der Kanaloberfläche durch die Heizeinrichtung (15) wärmeleitend verbunden ist.

3. Ventil (1) nach einem der Ansprüche 1 oder 2, **dadurch gekennzeichnet, dass** mindestens ein Teilstück des Kanals (3) des Ventils (1) eine von den anderen Teilstücken des Kanals (3) abweichende Richtung des Kanalverlaufs gegenüber den übrigen Teilstücken des Kanals (3) aufweist.

4. Ventil (1) nach einem der Ansprüche 1 bis 3, **dadurch gekennzeichnet, dass** die Heizeinrichtung (15) des Kanals (3) wenigstens zwei Heizungsteile aufweist, wobei ein jeweiliges Heizungsteil im Bereich eines der beiden sich von der Absperrvorrichtung erstreckenden Kanalabschnitte angeordnet ist.

5. Ventil (1) nach einem der Ansprüche 1 bis 4, **dadurch gekennzeichnet, dass** die Absperrvorrichtung eine Dichtung (10) umfasst, wobei die Dichtung (10) auf einer umfänglichen Auskragung (9) in der Kanaloberfläche angeordnet ist.

6. Ventil (1) nach einem der Ansprüche 1 bis 5, **dadurch gekennzeichnet, dass** die Absperrvorrichtung einen Stößel (11) mit einem endseitigen Ventilteller (12) umfasst.

7. Ventil (1) nach Anspruch 6, **dadurch gekennzeichnet, dass** der Stößel (11) und/oder der Ventilteller (12) einen Innenraum aufweist.

8. Ventil (1) nach Anspruch 7, **dadurch gekennzeichnet, dass** in dem Innenraum eine Heizvorrichtung (15) angeordnet ist.

9. Ventil (1) nach einem der Ansprüche 1 bis 8, **dadurch gekennzeichnet, dass** das Ventil (1) einen elektropneumatischen Öffnungs-/Schließ-Antrieb aufweist.

10. Ventil (1) nach einem der Ansprüche 1 bis 9, **dadurch gekennzeichnet, dass** der Kanal (3) im Wesentlichen aus Kohlenstoff oder einem kohlenstoffhaltigen Material geformt ist.

11. Ventil (1) nach einem der Ansprüche 6 bis 8, **dadurch gekennzeichnet, dass** der Stößel (11) und/oder der Ventilteller (12) im Wesentlichen aus Kohlenstoff oder einem kohlenstoffhaltigen Material bestehen.

## Claims

1. A valve (1) for vapor-tightly disconnecting two interconnected processing units, said valve comprising a through passage (3) for connecting the two processing units, and blocking means mounted in said passage (3), wherein the vapor-exposed surface of the passage (3) of the valve (1) has a vapor condensation repellent zone which is in thermally conductive communication with a heating means (15) which is disposed such as to enclose the valve (1),
**characterized in that**
the two openings (4) of the passage on each side of the valve (1) are aligned to one another with a vertical and/or horizontal offset.

2. The valve (1) of claim 1, **characterized in that**, additionally to the vapor-exposed surface of the passage (3), the blocking means is in thermally conductive communication with the heating means (15) throughout the entire area of the surface of the passage.

3. The valve (1) of claim 1 or claim 2, **characterized in that** in at least one section of the passage (3) of the valve (1) the passage extends in a different direction than in the other sections of the passage (3) relative to the remaining sections of the passage (3).

4. The valve (1) according to any of claims 1 to 3, **characterized in that** the heating means (15) of the passage (3) comprise at least two heater parts, with a respective one of said heater parts being disposed in the zone of a respective one of the two sections of the passage that extend from said blocking means.

5. The valve (1) according to any of claims 1 to 4, **characterized in that** said blocking means comprise a seal (10), said seal (10) being disposed in a surface of the passage on a circumferential shoulder (9).

6. The valve (1) according to any of claims 1 to 5, **characterized in that** said blocking means comprise a tappet (11) with a valve disk (12) provided at the end thereof.

7. The valve (1) of claim 6 **characterized in that** said tappet (11) and/or said valve disk (12) has an inner space.

8. The valve (1) of claim 7, **characterized in that** a heating means (15) is arranged in said inner space.

9. The valve (1) according to any of claims 1 to 8, **characterized in that** the valve (1) has an electropneumatic opening/closing drive.

10. The valve (1) according to any of claims 1 to 9, **characterized in that** the passage (3) is substantially formed from carbon or a carbonic material.

11. The valve (1) according to any of claims 6 to 8, **characterized in that** said tappet (11) and/or said valve disk (12) is substantially made from carbon or a carbonic material.

## Revendications

1. Soupape (1) pour désaccoupler de manière étanche à la vapeur deux unités de processus reliées l'une à l'autre, qui présente un canal de passage (3) qui relie les deux unités de processus à un dispositif de fermeture raccordé dans le canal (3), la surface du canal (3) de la soupape (1) en contact avec la vapeur présentant une partie qui empêche la condensation de la vapeur et qui est reliée de manière thermiquement conductrice à un dispositif de chauffage (15) qui entoure la soupape (1)
**caractérisée en ce que**
les deux ouvertures (4) du canal sont alignées l'une sur l'autre sur chaque côté de la soupape (1), avec un décalage en hauteur et/ou un décalage latéral.

2. Soupape (1) selon la revendication 1, **caractérisée en ce qu'**en plus de la surface du canal (3) en contact avec la vapeur, le dispositif de fermeture est relié de manière thermiquement conductrice au dispositif de chauffage (15) dans toute la partie occupée par la surface du canal.

3. Soupape (1) selon l'une des revendications 1 ou 2, **caractérisée en ce qu'**au moins une partie du canal (3) de la soupape (1) s'étend dans une direction différente de celle des autres parties du canal (3).

4. Soupape (1) selon l'une des revendications 1 à 3, **caractérisée en ce que** le dispositif de chauffage (15) du canal (3) présente au moins deux parties de chauffage, chaque partie de chauffage étant disposée dans la zone occupée par une des deux parties de canal qui partent du dispositif de fermeture.

5. Soupape (1) selon l'une des revendications 1 à 4, **caractérisée en ce que** le dispositif de fermeture comprend un joint d'étanchéité (10), le joint d'étanchéité (10) étant disposé dans la surface du canal sur un collet périphérique (9).

6. Soupape (1) selon l'une des revendications 1 à 5, **caractérisée en ce que** le dispositif de fermeture comprend un poussoir (11) dont une extrémité est dotée d'une tête de soupape (12).

7. Soupape (1) selon la revendication 6, **caractérisée en ce que** le poussoir (11) et/ou la tête de soupape (12) présentent un espace intérieur.

8. Soupape (1) selon la revendication 7, **caractérisée en ce qu'**un dispositif de chauffage (15) est disposé dans l'espace intérieur.

9. Soupape (1) selon l'une des revendications 1 à 8, **caractérisée en ce que** la soupape (1) présente un entraînement électro-pneumatique d'ouverture et de fermeture.

10. Soupape (1) selon l'une des revendications 1 à 9, **caractérisée en ce que** le canal (3) est formé essentiellement de carbone ou d'un matériau qui contient du carbone.

11. Soupape (1) selon l'une des revendications 6 à 8, **caractérisée en ce que** le poussoir (11) et/ou la tête de soupape (12) sont constitués essentiellement de carbone ou d'un matériau qui contient du carbone.
